# EUROPÄISCHE PATENTSCHRIFT

(11) **EP 2 188 359 B1**
(45) Veröffentlichungstag und Bekanntmachung des Hinweises auf die Patenterteilung: **13.04.2011**
(21) Anmeldenummer: 08801724.9
(22) Anmeldetag: 27.08.2008
(51) Int. Cl.: C11D 3/00, C11D 3/39, C11D 3/48, B01D 41/00, B01D 65/02, B08B 3/08, B08B 9/02

(54) **VERFAHREN ZUR REININGUNG VON SUBSTRATEN DURCH OXIDATIONSMITTEL UND REDUKTIONSMITTEL**
METHOD FOR PURIFYING SUBSTRATES BY MEANS OF OXIDATION AGENTS AND REDUCTION AGENTS
PROCÉDÉ DE NETTOYAGE DE SUBSTRATS AU MOYEN D'AGENTS D'OXYDATION ET D'AGENTS DE RÉDUCTION

(30) Priorität: 05.09.2007 DE 102007041991
(43) Veröffentlichungstag der Anmeldung: 26.05.2010
(73) Patentinhaber: Fülling, Rainer, 42855 Remscheid (DE)
(72) Erfinder: Fülling, Rainer, 42855 Remscheid (DE)
(74) Vertreter: Leifert & Steffan
(86) Internationale Anmeldenummer: PCT/EP2008/006995
(87) Internationale Veröffentlichungsnummer: WO 2009/030405

(56) Entgegenhaltungen:
- WO-A-02/064718
- DE-B- 1 083 232
- US-A- 4 425 380
- US-A1- 2003 132 160
- US-A1- 2003 146 169

## Beschreibung

Die vorliegende Erfindung betrifft ein Verfahren zur Reinigung von Substraten durch Permanganat und Ferrat (VI) als Oxidationsmittel und anschließend durch Reduktionsmittel. Ferner betrifft die vorliegende Erfindung die Verwendung von Oxidationsmitteln zur Oxidation von extrazellulären polymeren Substanzen (EPS).

Hartsubstanzen bilden für viele Organismen einen natürlichen Lebensraum. Die organischen Ablagerungen dieser Organismen werden als "Biofilm" oder "Biofouling" bezeichnet. Die verschiedenen, auf Biofouling-Basis beruhenden Beläge bzw. Agglomerationen bringen erhebliche Nachteile im technischen Bereich. Die Ablagerungen führen dazu, dass die Leistungsfähigkeit von Lagerungs-, Filtrier-, Klassier- und Transportvorrichtungen erheblich beeinträchtigt werden. Durch die Verengung von Rohrquerschnitten beispielsweise wird der Durchfluss behindert. Ebenso sind Schädigungen durch Erosion oder Korrosion möglich. Erhöhter Wartungs- und Betriebsaufwand sind die Folge. Die mit Biofouling zusammengehaltenen Beläge in Trinkwasser-Rohrleitungen sind als Ausgangspunkt der Legionellenverkeimung gefürchtet und beeinflussen zudem den Wärmeübergang und die Fliessgeschwindigkeit. Auch können Biofouling-Beläge auf Mess- und Steuerungsinstrumenten die Funktionsfähigkeit der Systeme beeinflussen.

Zu den wesentlichen Stoffgruppen der organischen Ablagerungen zählen die EPS (Raszka, A.; Chorvatova, M.; Wanner, J. Acta hydrochim. hydrobiol. 2006, 34, 411-424). Dabei handelt es sich um Stoffe, die von Mikroorganismen ausgeschieden werden. Die EPS bestehen aus Biopolymeren. Durch die Adsorption von Wasser bilden sich Hydrogele, wodurch sich eine schleimartige Matrix bildet. Damit wird dem Biofilm eine stabile Form gegeben. EPS bestehen aus hochmolekularen Substanzen, die Polysaccharide, Proteoglykane, Proteine, Glykoproteine, Lipide und Nukleinsäuren enthalten können. Die sehr dünne, glitschige Biofouling-Schleimschicht beträgt oft nur 15 µm oder weniger, beispielsweise < 0,3 µm, und kann auch in mehreren Schichten übereinander strukturiert sein.

Auf Grund der oben beschriebenen Nachteile ist die Entfernung von Ablagerungen wünschenswert. Allerdings hat sich herausgestellt, dass eine Chlorierung oder andere übliche chemische Behandlung, z. B. durch Aldehyde, beispielsweise Formaldehyd, sowie Antibiotika das Biofouling - wenn überhaupt - nicht oder nur ungenügend beeinflusst (WO02/064718A1).

Zur Entfernung des Biofoulings sind diverse Verfahren beschrieben.

In der WO03/092919A1 wird ein Verfahren zur simultanen Reinigung und Desinfektion von Industriewasser-Systemen beschrieben. Dazu werden Alkalichlorite und -chlorate mit Säuren im Industriewasser gelöst und für 72 h zirkulierend durch das System gepumpt. Dabei wird Chlordioxid freigesetzt.

Die Veröffentlichung WO2007/019249A1 beschreibt eine Zusammensetzung, die bei alkalischem pH-Wert einen aktiven Sauerstoff-Donor wie Wasserstoffperoxid oder Peressigsäure enthält. Damit soll sich Biofouling von allen Oberflächen, die mit Wasser in Kontakt sind, entfernen lassen. Zu einer vollständigen Entfernung des Biofouling ist jedoch weder Wasserstoffperoxid bei pH 12 noch das bei Raumtemperatur besser wirksame Natriumhypochlorit in der Lage (S. Strugholtz et. al. Effektivität verschiedener Chemikalien zur Entfernung der Foulingmatrix von Membranen aus der Trinkwasseraufbereitung, 6. Aachener Tagung Siedlungswasserwirtschaft und Verfahrenstechnik, Erftverband Bergheim, Beitrag W 11 2006).

In der US03132052A1 werden Nitrosylschwefelsäure- und -anhydrid-Zusammensetzungen offenbart, die organische Fouling-Ablagerungen entfernen.

Zur Prävention der Biofouling-Bildung werden in der WO03/011347A1 Mischungen aus stabilisierter Bromlösung eingesetzt, die neben einer Bromverbindung und einem Stabilisator ein Oxidationsmittel wie Permanganat enthalten. Chlor, hypochlorige Säure und deren Salze sind jedoch bevorzugt. Die Patentschrift US6287473B1 offenbart ätzende oxidierende Bromzusammensetzungen zur Kontrolle des Blofouling in Industriewasser-Systemen. Dazu werden Bromchlorid, ein Halogenstabilisator sowie ein Erdalkalimetallhydroxid in Lösung eingesetzt.

Die US6183646 beschreibt eine Entsalzungsanlage, in der eine Osmosemembran eingesetzt wird. Weiterhin wird ein Verfahren zur Prävention von Biofouling beansprucht. Zur Unterbindung des Wachstums von biologischen Organismen werden Oxidationsmittel wie Wasserstoffperoxid, Chlor oder Ozon eingesetzt.

In der Patentschrift US6380182B1 wird eine Zusammensetzung beschrieben, in der Sulfaminsäure oder deren Salze eingesetzt werden, um Biofouling in wässrigen Systemen zu kontrollieren.

Ebenso werden organische Verbindungen zur Entfernung bzw. Prävention von Biofouling beschrieben. So wird in der US5128051A ortho-Phthalaldehyd offenbart.

In der WO02/064718A1 wird ein Reinigungsmittel beansprucht, das Lebensmittel-Konservierungsstoffe und nicht-toxische, insbesondere organische Säuren enthält.

In der US4816061A wird eine Methode offengelegt, bei der Alkylthioalkylamin-Derivate bei alkalischem pH-Wert und einer hohen Wasserhärte eingesetzt werden.

Weiterhin wird in der US5670055A ein Verfahren zur Dispergierung von Biofilmen, die durch Bakterien oder andere Mikroorganismen verursacht worden sind, durch lineare Alkylbenzolsulfonate beschrieben.

In der US4966716A werden Mischungen aus organischen Ammoniumhydrohalogenen und Brom beansprucht, um Biofouling in wässrigen Kreislaufsystemen zu kontrollieren.

Eine weitere Methode zur dauerhaften Entfernung des Biofouling in Kreislaufsystemen offenbart US4297224. Ein Brom-Chlor-Hydantoin-Derivat wird dem Kreislauf permanent zugesetzt, um das Biofouling zu unterbinden.

Durch die in der US5128045A genannten Methode werden Eisen- und Manganionen stabilisiert und gleichzeitig Biofouling verhindert. Dazu wird eine Mischung aus einem ungesättigten, wasserlöslichen Ethylen-Polymer, ggf. mit Phosphonaten, einer Mono-Carbonsäure, einer ungesättigten Sulfonsäure, Methylenbis(thiocyanat) und 2-(Thiocyanomethylthio)benzothiazol verwendet.

In der EP0397184A1 wird ein Prozess zur Unterbindung von Wachstum und Reproduktion von Mikroorganismen in Umkehr-Osmosemembranen durch Zusatz von Chloramin offenbart.

Die DE-A-1083232 betrifft ein Verfahren zum Regenerieren von gebrauchten Filterschichten ebenfalls unter Verwendung von Chloramin in Verbindung mit anorganischen oder organischen Benetzungsmitteln, z.B. quaternären Ammoniumbasen, Sulfonen usw. Als bekannt sieht die DE-A-1083232 an, dass Filterstoffe mit oxidierenden Stoffen wie beispielsweise Kaliumpermanganat und anschließend mit reduzierenden Stoffen behandelt werden können. Konzentrationen der Oxidationsmittel und der pH-Wert der Lösungen werden jedoch nicht angegeben.

Die US 4,426,380 betrifft die Entfernung von Harzschmieren aus Löchern in mehrschichtigen Leiterplatinen, wobei die Harzschmiere aus dem polymeren Lelterplatinenmaterial gebildet wird, Zur Entfernung dieser Materialien werden alkalische hochkonzentrierte Permangenatlösungen eingesetzt. Anschließend erfolgt ein Reduktionsschritt.

Die US 2003/0146169 A1 betrifft die Herstellung von Ferraten.

In WO 02/084718 A1 wird eine präventive Behandlung von Substraten mit sauren Permanganstlösungen offenbart.

Der Stand der Technik befasst sich mit Blofouling-Kontaminationen, die sich im Groben In drei Stufen unterteilen lassen.

Zunächst werden Verfahren beschrieben, die gelöste Rückstände, überwiegend In Wasser, beseitigen. Dazu werden Reinigungemittel eingesetzt, die diese Rückstände zu entfernen Im Stande sind. Das Vermögen, anhaftende Substanzen zu lösen, besitzen sie jedoch nicht.

Weiterhin werden Verfahren offenbart, die eine Prävention oder Kontrolle des Biofouling ermöglichen. Dies bedeutet, dass die Bildung der Ablagerungen, beispielsweise durch permanente Zugabe in das System, vermieden wird, gebildete Ablagerungen selbst jedoch nicht lösen.

Schließlich zeigen einige Verfahren die Möglichkeit auf, Biofouling-Ablagerungen zu entfernen. Dabei werden zum Teil starke Säuren eingesetzt, die Korrosion begünstigen. Darüber hinaus wird der Einsatz komplexer Mehrkomponentensysteme aufgezeigt. Diese Systeme sind für den Anwender zum Teil schwierig herzustellen und zu handhaben. Die Systeme enthalten zudem schwer entfernbare organische Zusätze oder aggressive und gesundheitsschädliche Brom- und Chlorverbindungen, die zu organischen, halogenhaltigen Substanzen reagieren können. Ein Einsatz in Trinkwasseranlagen etwa ist damit auszuschließen.

Es ist Aufgabe der vorliegenden Erfindung, ein neues, einfaches und kostengünstiges Verfahren zur Reinigung von Substraten anzugeben, das die Nachteile des Standes der Technik nicht aufweist und auf Grund geringer toxischer Wirkung auch in Trinkwassersystemen eingesetzt werden kann.

Überraschenderweise wurde gefunden, dass diese Aufgabe durch ein Verfahren gemäß Anspruch 1, in dem Permanganat und/oder Ferrat (VI) als Oxidationsmittel und anschließend ein oder mehrere Reduktionsmittel eingesetzt werden, gelöst werden kann. Es war weiterhin überraschend, dass die Reinigung mit Permanganat und/oder Ferrat (VI) in alkalischem Medium zu hervorragenden Ergebnissen führt.

Gegenstand der vorliegenden Erfindung ist daher ein Verfahren zur Reinigung von Substraten der eingangs genannten Art, das dadurch gekennzeichnet ist, dass die Reinigung durch mindestens ein Oxidationsmittel, ausgewählt aus der Gruppe, bestehend aus Permanganat und Ferrat (VI), und anschließend durch ein Reduktionsmittel erfolgt, dadurch gekennzeichnet, dass das aus der Gruppe bestehend aus Permanganat und Ferrat (VI) gewählte Oxidationsmittel in Form einer alkalischen Lösung vorliegt und das gelöste Oxidationsmittel in der Lösung einen Massenanteil von 0,002 bis 0,1 Massen-% besitzt.

Vorzugsweise wird als Oxidationsmittel Permanganat eingesetzt.

Das Verfahren wird im Folgenden als erfindungsgemäßes Verfahren bezeichnet.

Das Verfahren wird zur Reinigung von Substraten eingesetzt. Vorzugsweise ist das Substrat an dessen Oberfläche verunreinigt. Unter dem Begriff "Oberfläche" ist jede Art von Oberfläche zu verstehen, insbesondere umfasst der Begriff neben makroskopischen Oberflächen auch mikroskopische Oberflächen wie Porenoberflächen, wie sie beispielsweise in Filtern und Membranen vorkommen.

Die Substrate sind vorzugsweise ausgewählt aus der Gruppe, bestehend aus Filtriervorrichtungen, Klassiervorrichtungen, Transportvorrichtungen und Lagerungsvorrichtungen für Fluide.

Die Filtriervorrichtungen sind vorzugsweise ausgewählt aus der Gruppe, bestehend aus Filtern und Membranen. Filtriervorrichtungen können auch Vorrichtungen sein, die zur Dialyse von Blut eingesetzt werden.

Die Klassiervorrichtungen sind Vorrichtungen, die für Klassierverfahren eingesetzt werden. Dies beinhaltet Verfahren wie Siebklassieren, Stromklassieren mit dem Trennmedium Luft, Stromklassieren mit dem Trennmedium Wasser, und Gleichfälligkeitsklassieren.

Die Transportvorrichtungen sind vorzugsweise ausgewählt aus der Gruppe, bestehend aus Rohren, Rohrleitungen, Pipelines, Schläuchen, Kapillaren und Pumpen. Transportvorrichtungen können auch Vorrichtungen sein, die zur Dialyse von Blut eingesetzt werden.

Die nach dem erfindungsgemäßen Verfahren zu reinigenden Substrate können mit anorganischem oder organischem Material kontaminiert sein. Vorzugsweise werden durch das Verfahren Substrate gereinigt, die mit organischem Material, besonders bevorzugt Mikroorganismen, insbesondere Bakterien, vor allem Legionellen, kontaminiert sind. Vorzugsweise ist das organische Material ausgewählt aus der Gruppe, bestehend aus den Aggregaten, Bestandteilen, Ausscheidungen und Abbauprodukten der Mikroorganismen, besonders bevorzugt (EPS). Vorzugsweise besteht das organische Material aus den Ausscheidungen und Abbauprodukten der Mikroorganismen.

Weiterhin können durch das erfindungsgemäße Verfahren Substrate, die mit Mikrobenfilmen oder Algen kontaminiert sind, gereinigt werden.

Das Oxidationsmittel besteht vorzugsweise aus Salzen, die sich vollständig in Wasser lösen. Bevorzugt werden Alkalisalze, besonders bevorzugt Kalium- oder Natriumsalze, ganz besonders bevorzugt Kaliumsalze eingesetzt. Weiterhin können beispielsweise Calciumsalze eingesetzt werden.

Das Oxidationsmittel liegt gelöst vor. Bevorzugt liegt das Oxidationsmittel in Wasser gelöst vor. Besonders bevorzugt ist das Wasser ganz oder teilweise enthärtet, ganz besonders bevorzugt deionisiert. Die Lösung des gelösten Oxidationsmittels ist alkalisch. Insbesondere liegt der pH-Wert der Lösung in einem Bereich von 9 bis 14, besonders bevorzugt 11 -14, ganz besonders bevorzugt 12-14.

Zur Herstellung einer Lösung mit Oxidationsmittel wird die Lösung vorzugsweise zunächst alkalisch eingestellt, und danach das Oxidationmittel der Lösung zugegeben.

Das gelöste Oxidationsmittel hat in der Lösung einen Massenanteil von 0,002 bis 0,1 Massen-%. Bevorzugt liegt der Massenanteil bei 0,01 bis 0,1 Massen-%.

In dem Verfahren werden vorzugsweise keine weiteren Oxidationsmittel eingesetzt. Sind weitere Oxidationsmittel vorhanden, so stellt deren massenprozentualer Anteil bezogen auf den Gesamtoxidationsmittelgehalt vorzugsweise höchstens 20 Massen-%, besonders bevorzugt höchstens 10 Massen-% und ganz besonders bevorzugt höchstens 5 Massen-% dar.

Das Reduktionsmittel wird vorzugsweise ausgewählt aus der Gruppe, bestehend aus schwefliger Säure, deren Salzen, wie z. B. Hydrogensulfit und Sulfit, dischwefliger Säure, deren Salzen, Hydrazin und Hydroxylamin. Bevorzugt sind die Alkalisalze der schwefligen Säure. Besonders bevorzugt als Reduktionsmittel sind Hydrogensulfit und Disulfit, das auch zur Trinkwasseraufbereitung eingesetzt werden kann.

Dem Fachmann ist bekannt, dass Hydrogensulfit und Disulfit, gelöst in Wasser, ein Gleichgewicht bilden.

Das Reduktionsmittel liegt vorzugsweise gelöst vor. Bevorzugt liegt das Reduktionsmittel in Wasser gelöst vor. Besonders bevorzugt ist das Wasser ganz oder teilweise enthärtet oder deionisiert.

Der Gehalt an Reduktionsmitteln liegt vorzugsweise in einem Bereich von 0,01 bis 10 g/L. Bevorzugt ist ein Bereich von 0,1 bis 4 g/L, besonders bevorzugt 0,5 bis 2 g/L.

Das Reduktionsmittel kann mit einem Metallsalzkomplexbildner und/oder Chelatbildner vermischt sein. Vorzugsweise ist der Metallsalzkomplexbildner Oxalsäure oder Zitronensäure, ein Salz der Säuren oder ein Gemisch davon. Besonders bevorzugt ist der Metallsalzkomplexbildner das Salz einer Oxalsäure. Ganz besonders bevorzugt ist das Salz der Oxalsäure vollständig löslich in wässrigen Lösungen. Insbesondere ist das Salz der Oxalsäure ein Alkalisalz.

Das Reduktionsmittel kann mit einer Säure vermischt sein. Die Säure kann jede beliebige Säure sein. Vorzugsweise wird eine Säure verwendet, die das Substrat nicht angreift. Als Säure besonders bevorzugt ist Salpetersäure.

Der Gehalt an Metallsalzkomplexbildern beträgt vorzugsweise 0,01 bis 10 g/L. Bevorzugt liegt der Gehalt bei 0,1 bis 4 g/L, besonders bevorzugt 0,2 bis 2 g/L.

Im erfindungsgemäßen Verfahren ist die Ablagerung auf dem Substrat von einem Medium umgeben. Vorzugsweise ist das Medium eine Flüssigkeit.

Vor oder gleichzeitig mit der Zugabe des Oxidationsmittels kann das Substrat von alkalischem, neutralem oder saurem Medium umgeben sein. Vorzugsweise ist das Medium alkalisch. Der pH-Wert liegt bevorzugt in einem Bereich von 9 bis 14, besonders bevorzugt von 11 bis 14 und ganz besonders bevorzugt von 12 bis 14.

Zur Heraufsetzung des pH-Werts können handelsübliche Laugen eingesetzt werden. Vorzugsweise werden Natronlauge oder Kalilauge eingesetzt.

Das erfindungsgemäße Verfahren ist dadurch gekennzeichnet, dass nach dem Oxidationsmittel ein Reduktionsmittel zugegeben wird. Vorzugsweise ist der pH-Wert vor Zugabe des Reduktionsmittels in einem Bereich von 7-9.

Die Reinigung nach dem erfindungsgemäßen Verfahren kann statisch oder dynamisch erfolgen. Statisch bedeutet dabei, dass die Oxidations- und Reduktionsmittel mit den Ablagerungen im ruhenden Zustand zur Reaktion gebracht werden. Ein statisches Verfahren kann den Ausbau der kontaminierten Substrate aus einer Anlage bedeuten. Weiterhin ist damit das Einlegen der kontaminierten Substrate in Tauchbädern umfasst.

Dynamisch erfolgt das erfindungsgemäße Verfahren, wenn die erfindungsgemäßen Reinigungsmittel durch gerichtete Kräfte auf die Ablagerungen einwirken. Dies umfasst Verfahren, bei denen die Reinigungsmittel die Substrate durchströmen. Dies kann schubweise oder kontinuierlich erfolgen. Es umfasst ferner die Möglichkeit, die Reinigungsmittel in einem Kreislaufsystem mit den Ablagerungen zur Reaktion zu bringen.

Zwischen der Zugabe des Oxidationsmittels und des Reduktionsmittels kann ein oder mehrere Verfahrensschritt(e) zur Spülung des Systems eingebaut werden. Dazu kann Wasser durch das zu reinigende System hindurchgeleitet werden. Ein weiterer Spülschritt kann oder mehrere weitere Spülschritte können nach der Zugabe des Reduktionsmittels erfolgen. Vorzugsweise wird bei dem Spülschritt oder den Spülschritten zwischen der Behandlung mit Oxidationsmittel und Reduktionsmittel ganz oder teilweise enthärtetes Wasser, besonders bevorzugt deionisiertes Wasser eingesetzt. Auch in dem oder den gegebenenfalls erfolgenden abschließenden Spülschritt(en) wird vorzugsweise ganz oder teilweise enthärtetes Wasser, besonders bevorzugt deionisiertes Wasser eingesetzt.

In dem erfindungsgemäßen Verfahren kann die Reinigung durch gleiche oder verschiedene Oxidationsmittel einfach oder mehrfach erfolgen. Bei mehrfacher Reinigung können zwischen der jeweiligen Zugabe des Oxidationsmittels ein oder mehrere Spülschritte erfolgen.

In dem erfindungsgemäßen Verfahren kann die Reinigung durch gleiche oder verschiedene Reduktionsmittel einfach oder mehrfach erfolgen. Bei mehrfacher Reinigung können zwischen der jeweiligen Zugabe des Reduktionsmittels ein oder mehrere Spülschritte erfolgen.

Das zu reinigende Substrat kann beispielsweise eine mit EPS kontaminierte Membran, die in einer Rohrleitung eingebaut ist, sein. Die eingebaute Membran kann über eine weitere Rohrleitung überbrückbar sein. An dieser Überbrückung kann eine Pumpe angebracht sein. Während des normalen Betriebs kann die weitere, überbrückende Rohrleitung verschlossen sein, so dass Wasser durch die Membran fließt. Zur Reinigung kann der Zu- und Ablauf verschlossen sein, so dass sich die Membran mit der Überbrückung in einem Kreislaufsystem befindet. In diesem Kreislaufsystem kann das erfindungsgemäße Verfahrungen zur Reinigung ausgeführt werden. Die an der Reinigung beteiligten Stoffe können in das Kreislaufsystem gegeben und durch die Membran gepumpt werden. Die Stoffe können so nach der Reinigung aufgefangen werden und gelangen nicht in das System des normalen Betriebs.

Das Verfahren kann beispielsweise so ausgeführt werden:
1. Absperrung der Zu- und Abläufe vor bzw. hinter der Membran
2. Zugabe von Natronlauge, bis im Kreislaufsystem ein pH-Wert von 12 erreicht ist
3. Zugabe von Kaliumpermanganat-Lösung
4. bei einem bestimmten Zufuhrdruck, z. B. 1 bar, wird die Permanganat-Lösung für 30 min im Kreislauf durch die Membran gepumpt
5. Zulauf von Wasser, bis ein neutraler bis moderat alkalischer pH-Wert (7-9) erreicht ist
6. Zugabe von Natriumdisulfit
7. Pumpen wie bei Punkt 4
8. Spülen des Kreislaufsystems, bis neutraler pH erreicht ist

Im erfindungsgemäßen Verfahren können andere Reinigungs- und Desinfektionsmittel zugesetzt sein, die vorzugsweise in den Spülschritten und/oder dem Reduktionsmittel zugesetzt werden. Bevorzugt können Korrosionsschutzmittel, Biozide, Netzmittel und Tenside zugesetzt sein.

### Beispiele

### Allgemein

Zum Test der Reinigungswirkung wurde eine Versuchsanlage mit Edelstahlronden für Flachmembranen eingesetzt. Die Membran ist eine Polyethersulfonmembran (19,5 cm Durchmesser; Firma Membrana, Wuppertal. Das Wasser einer biologischen Versuchskläranlage wurde über Membranfiltration aufkonzentriert und das mit EPS angereicherte Wasser als EPS-Konzentrat zur Erzeugung von Membranbelägen eingesetzt.

Anschließend wurde mit den angegebenen Reinigungsmitteln im crossflow-Verfahren 0,5 h - 1,0 h gereinigt. Alle Versuche wurden bei 1 bar Zufuhrdruck durchgeführt.

Die Reinigungsmittel werden, wenn nicht anders angegeben, in einem Volumen von 500 mL eingesetzt.

In dem Schritt Spülen wird das Reinigungsmittel mit jeweils 3 L entsalztem Wasser entfernt (in der folgenden Tabelle mit "+" gekennzeichnet), und anschließend die Anlage mit entsalztem Wasser im Kreislauf betrieben und die Permeabilität bestimmt.

### Herstellung der Lösungen

### Permanganat alkalisch (erfindungsgemäß)

5 mL Natronlauge 45 % werden in 450 mL deionisiertem Wasser gelöst 10 mL KMnO₄ 1 % werden auf 500 mL deionisiertes Wasser aufgefüllt

### Permanganat sauer (nicht erfindungsgemäß)

10 mL KMnO₄ 1%
5 mL Salpetersäure 10 %
werden auf 500 mL deionisiertes Wasser aufgefüllt

### Ferrat (VI) (erfindungsgemäß)

a) Synthese des Ferrats (VI):
   nach: Jander, Blasius: Lehrbuch der analytischen und präparativen anorganischen Chemie, S. 395, Hirzel-Verlag Stuttgart, 1969.
   10g Eisenpulver und 20 g Kaliumnitrat (durch Schmelzen entwässert und feln pulverisiert) werden innig vermischt und ca. 1 cm hoch auf ein Eisenblech geschichtet. An einer Stelle gibt man ca. 1 g eines Gemisches der beiden Komponenten im Verhältnis 1. Beim Erhitzen des Eisenbleches durch einen untergestellten Bunsenbrenner (an der Stelle mit dem 1:1-Gemisch muss besonders stark erhitzt werden) tritt Zündung ein, und unter Entweichen eines weißen Nebels schreitet die Reaktion durch die gesamte Masse fort.
b) Herstellung der Lösung
   13 g erstarrte Schmelze wird gemahlen und mit 1 L Wasser versetzt, filtriert (Paplerfllter) und 300 mL des Filtrats sofort dem Wasser zugesetzt. Der pH-Wert beträgt 10-11.

### Disulfit (erfindungsgemäß)

2 g Natriumdisulfit
werden auf 500 mL deionisiertes Wasser aufgefüllt

### Disulfit/Oxalsäure (erfindungsgemäß)

1g Natriumdlsulfft
1g Oxalsäure
werden auf 500 mL dolonisiertes Wasser aufgefüllt

### Hypochlorit 1 (nicht erfindungsgemäß)

1 mL Natriumhypochlerit-Lösung 12 %, käuflich erworben wird auf 500 mL deionisiertes Wasser aufgefüllt

### Hypochlorit 2 (nicht erfindungsgemäß)

2 mL Natriumhypochlorit-Lösung 12 %, käuflich erworben
werden auf 500 mL deionisiertes Wasser aufgefüllt

### Hypochlorit 3 (nicht erfindungsgemäß)

2 mL Natriumhypochlorit-Lösung 12 %, käuflich erworben 5 mL NaOH 40 %
werden auf 500 mL deionisiertes Wasser aufgefüllt

### Reinigungsversuche

### Versuche zur Entfernung von Belägen auf Membranen

Versuche 1 und 3 sind erfindungsgemäß. Versuche 2 und 4 sind Vergleichsbeispiele. Die Reinigungsmittel werden, wenn nicht anders angegeben, in einem Volumen von 500 mL eingesetzt.

| **Versuch** | **1** | **2** | **3** | **4** |
|---|---|---|---|---|
| Permeabilität in L/(m²· h· bar) vor EPS-Konzentrat-Zugabe | 980 | 980 | 980 | 980 |
| rel. Permeabilität % | 100 ± 2 | 100 ± 2 | 100 ± 2 | 100 |
| EPS-Konzentrat In L | 0,2 | 0,2 | 0,2 | 0,2 |
| Einwirkzeit in min | 30 | 30 | 30 | 30 |
| Spülen | + | + | + | + |
| rel. Permeabilität % | 10 | 8 | 11 | 13 |
| Reinigungsmittel 1 | Permaganat alkalisch | Permaganat sauer | Ferrat VI | Hypochlorit 1 |
| Einwirkzeit min: | 30 | 30 | 30 | 30 |
| Spülen | + | + | + | - |
| rel. Permeabilität % | 29 | 8 | 27 | 14 |
| Reinigungsmittel 2 | Hydrogensulfit | Hydrogensulfit | Disulfit/ Oxalsäure | Hypochlorit 2 |
| Einwirkzeit mln | 30 | 30 | 30 | 60 |
| Spülen | + | + | + | + |
| rel. Permeabilität % | 100 ± 2 | 12 | 77 | 23 |
| Reinigungsmittel 3 | | Hydrogensulfit | | Hypochlorit 3 |
| Einwirkzeit In mln | | 30 | | 30 |
| Spülen | | + | | + |
| rel. Permeabilität % | | 92 ± 2 | | 49 |

In Versuch 4 wurde anschließend die Membran mit der Reinigungsprozedur 1 gereinigt. Die relative Permeabilität betrug dann 102%.

Durch das EPS-Konzentrat wird die relative Permeabilität der Membran In den vier Versuchen von anfangs 100 % auf 8 bis 13 % herab gesetzt. Im Versuch 1 wirkt eine alkalische Permanganat-Lösung auf das EPS für 30 min ein. Nach dem Spülschritt erhöht sich die Permeabilität auf 29 %. Anschließend wird die Disulfit-Lösung für 30 min auf die Membran gegeben. Nach einem erneuten Spülschritt wird eine Permeabilität von 100 % ermittelt, die der anfänglichen Permeabilität vor der EPS-Zugabe entspricht.

Im zweiten Versuch wird statt der alkalischen eine saure Permanganat-Lösung eingesetzt. Nach 30 min einwirken und Spülen ist die Permeabilität bei unverändert 8 %. Durch zweimaliges 30-minütiges Einwirken der Disulfit-Lösung mit einem zwischengeschalteten Spütschritt erhöht sich die Permeabilität auf 92 %.

In Versuch 3 wird als Reinigungsmittel Ferrat (VI) verwendet. Nach der Einwirkzeit erhöht sich die Permeabilität von 11 auf 27%. Durch einmaligen Einsatz einer Disulfit/Oxalsäure-Lösung wird eine Permeabilität von 77% erreicht. Im Vergleichsbeispiel 4 wird das EPS einer Hypochlorit-Lösung ausgesetzt. Nach 30 min Einwirken beträgt die Permeabliltät nahezu unverändert 14%. Mit einer doppelt konzentrierten Lösung sowie doppelter Zeit (80 min) erhöht sich die Permeabilität auf 23 %. Durch alkalisch Hypochlorlt-Lösung kann dieser Wert auf 49% erhöht werden. Wird an dieser Membran nun das erfindungegemäße Reinigungsverfahren nach Versuch 1 ausgeführt, kann eine vollständige Permeabilltät herbeigeführt werden.

In den voran genannten Beispielen 1 und 3 erweisen sich die erfindungsgemaßon Verfahren als wirksame Methode zur Reinigung einer mit EPS kontaminierten Membran. Wird ein Verfahren eingesetzt, dass dem Stand der Technik entspricht, kann die ursprüngliche Permeabilität nicht wiederhergestellt werden.

## Patentansprüche

1. Verfahren zur Reinigung von Substraten, wobei die Reinigung durch mindestens ein Oxidationsmittel, ausgewählt aus der Gruppe, bestehend aus Permanganat und Ferrat (VI), und anschließend durch ein Reduktionsmittel erfolgt, **dadurch gekennzeichnet, dass** das aus der Gruppe bestehend aus Permanganat und Ferrat (VI) gewählte Oxidationsmittel in Form einer alkalischen Lösung vorliegt und das gelöste Oxidationsmittel in der Lösung einen Massenanteil von 0,002 bis 0,1 Massen-% besitzt.

2. Verfahren nach Anspruch 1, **dadurch gekennzeichnet, dass** das Substrat an dessen Oberflächen verunreinigt ist, wobei es sich bei den Substraten um Oberflächen von Filtrier- oder Klassiervorrichtungen sowie Transport- und Lagerungsvorrichtungen für Fluide handelt, die Filtriervorrichtungen ausgewählt sind aus der Gruppe, bestehend aus Filtern und Membranen und die Transportvorrichtungen ausgewählt sind aus der Gruppe, bestehend aus Rohren, Rohrleitungen, Pipelines, Schläuchen, Kapillaren und Pumpen.

3. Verfahren nach einem der Ansprüche 1 oder 2, **dadurch gekennzeichnet, dass** das Substrat mit organischem Material kontaminiert ist, wobei das organische Material ausgewählt ist aus der Gruppe, bestehend aus Mikroorganismen, deren Aggregaten, Bestandteilen, Ausscheidungen und Abbauprodukten.

4. Verfahren nach Anspruch 3, **dadurch gekennzeichnet, dass** die Mikroorganismen Bakterien sind und dass es sich bei den Aggregaten, Bestandteilen, Ausscheidungen und Abbauprodukten um extrazelluläre polymere Substanzen (EPS) handelt.

5. Verfahren nach Anspruch 4, **dadurch gekennzeichnet, dass** es sich bei den Bakterien um Legionellen handelt.

6. Verfahren nach Anspruch 1, **dadurch gekennzeichnet, dass** der pH in einem Bereich von 9 bis 14 liegt.

7. Verfahren nach einem der Ansprüche 1 bis 6, **dadurch gekennzeichnet, dass** das Reduktionsmittel gelöst vorliegt und ausgewählt ist aus der Gruppe, bestehend aus schwefliger Säure, deren Salzen, dischwefliger Säure, deren Salzen, Hydrazin und Hydroxylamin.

8. Verfahren nach einem der Ansprüche 1 bis 7, **dadurch gekennzeichnet, dass** das Reduktionsmittel mit einem Metallsalzkomplexbildner vermischt ist.

9. Verfahren nach einem der Ansprüche 1 bis 8, **dadurch gekennzeichnet, dass** das Substrat vor oder gleichzeitig mit der Zugabe des Oxidationsmittels von alkalischem Medium umgeben ist.

10. Verfahren nach Anspruch 9, **dadurch gekennzeichnet, dass** das Medium einen pH von 12 oder mehr hat.

11. Verfahren nach Anspruch 9 oder 10, **dadurch gekennzeichnet, dass** nach Zugabe des Oxidationsmittels der pH des Mediums auf einen Bereich von 7-9 gebracht und anschließend das Reduktionsmittel zugegeben wird.

12. Verfahren nach einem der Ansprüche 9 bis 11, **dadurch gekennzeichnet, dass** zwischen der Zugabe des Oxidationsmittels und der Zugabe des Reduktionsmittels eine Spülung vorgenommen wird oder mehrere Spülungen vorgenommen werden, und/oder dass nach der Zugabe des Reduktionsmittels eine Spülung vorgenommen wird oder mehrere Spülungen vorgenommen werden.

13. Verfahren nach einem der Ansprüche 9 bis 12, **dadurch gekennzeichnet, dass** die Reinigung durch gleiche oder verschiedene Oxidationsmittel einfach oder mehrfach erfolgen kann und/oder dass die Reinigung durch gleiche oder verschiedene Reduktionsmittel einfach oder mehrfach erfolgen kann.

14. Verfahren nach Anspruch 13, **dadurch gekennzeichnet, dass** bei mehrfacher Reinigung zwischen der jeweiligen Zugabe des Oxidationsmittels ein Spülschritt oder mehrere Spülschritte erfolgen, und/oder dass bei mehrfacher Reinigung zwischen der jeweiligen Zugabe des Reduktionsmittels ein Spülschritt oder mehrere Spülschritte erfolgen.

## Claims

1. Method of purifying substrates, wherein the purification is effected by means of at least one oxidizing agent, selected from the group consisting of permanganate and ferrate (VI), and then by means of a reducing agent, **characterized in that** the oxidizing agent selected from the group consisting of permanganate and ferrate (VI) is present in the form of an alkaline solution and the dissolved oxidizing agent has a mass percentage in the solution of 0.002 to 0.1 % by mass.

2. Method according to claim 1, **characterized in that** the substrate is contaminated at its surfaces, wherein the substrates are surfaces of filtration- and/or classification devices as well as transport- and storage devices for fluids, the filtration devices are selected from the group consisting of filters and membranes and the transport devices are selected from the group consisting of pipes, conduits, pipelines, hoses, capillaries and pumps.

3. Method according to one of claims 1 or 2, **characterized in that** the material is contaminated with organic material, wherein the organic material is selected from the group consisting of microorganisms as well as aggregates, constituents, precipitations and decomposition products thereof.

4. Method according to claim 3, **characterized in that** the microorganisms are bacteria and that the aggregates, constituents, precipitations and decomposition products are extracellular polymeric substances (EPS).

5. Method according to claim 4, **characterized in that** the bacteria are Legionella bacteria.

6. Method according to claim 1, **characterized in that** the pH lies in a range of 9 to 14.

7. Method according to one of claims 1 to 6, **characterized in that** the oxidizing agent is present as a solute and is selected from the group consisting of sulphurous acid, salts thereof, disulphurous acid, salts thereof, hydrazine and hydroxylamine.

8. Method according to one of claims 1 to 7, **characterized in that** the reducing agent is mixed with a metal salt complexing agent.

9. Method according to one of claims 1 to 8, **characterized in that** the substrate before or simultaneously with the addition of the oxidizing agent is surrounded by alkaline medium.

10. Method according to claim 9, **characterized in that** the medium has a pH of 12 or more.

11. Method according to claim 9 or 10, **characterized in that** after addition of the oxidizing agent the pH of the medium is brought to a range of 7-9 and then the reducing agent is added.

12. Method according to one of claims 9 to 11, **characterized in that** between the addition of the oxidizing agent and the addition of the reducing agent a rinsing step is conducted or a plurality of rinsing steps are conducted and/or that after the addition of the reducing agent a rinsing step is conducted or a plurality of rinsing steps are conducted.

13. Method according to one of claims 9 to 12, **characterized in that** the purification may be effected once or a plurality of times by means of identical or differing oxidizing agents and/or that the purification may be effected once or a plurality of times by means of identical or differing reducing agents.

14. Method according to claim 13, **characterized in that** in the case of a plurality of purification steps one rinsing step or a plurality of rinsing steps are effected between each addition of the oxidizing agent, and/or that in the case of a plurality of purification steps one rinsing step or a plurality of rinsing steps are effected between each addition of the reducing agent.

## Revendications

1. Procédé de purification de substrats, dans lequel la purification s'effectue par au moins un agent d'oxydation, sélectionné dans le groupe composé de permanganate et de ferrate (VI), puis par un agent de réduction, **caractérisé en ce que** l'agent d'oxydation sélectionné dans le groupe composé de permanganate et de ferrate (VI) se présente sous forme de solution alcaline et l'agent d'oxydation dissous dans la solution possède un pourcentage en masse de 0,002 à 0,1 % en masse.

2. Procédé selon la revendication 1, **caractérisé en ce que** le substrat est contaminé sur ses surfaces, les substrats étant des surfaces de dispositifs de filtration ou de classification ainsi que des dispositifs de transport et de stockage pour fluides, les dispositifs de filtration étant sélectionnés dans le groupe composé de filtres et membranes et les dispositifs de transport étant sélectionnés dans le groupe composé de tuyaux, conduites, pipelines, tuyaux flexibles, capillaires et pompes.

3. Procédé selon l'une des revendications 1 ou 2, **caractérisé en ce que** le matériau est contaminé par de la matière organique, la matière organique étant sélectionnée dans le groupe composé de micro-organismes, leurs agrégats, composants, précipitations et produits de décomposition.

4. Procédé selon la revendication 3, **caractérisé en ce que** les micro-organismes sont des bactéries et que les agrégats, composants, précipitations et produits de décomposition sont des substances polymères extracellulaires (SPE).

5. Procédé selon la revendication 4, **caractérisé en ce que** les bactéries sont des légionelles.

6. Procédé selon la revendication 1, **caractérisé en ce que** le pH est compris dans une gamme allant de 9 à 14.

7. Procédé selon l'une des revendications 1 à 6, **caractérisé en ce que** l'agent d'oxydation est sous une forme dissoute et est sélectionné dans le groupe composé d'acide sulfureux, de ses sels, d'acide disulfureux, de ses sels, d'hydrazine et d'hydroxylamine.

8. Procédé selon l'une des revendications 1 à 7, **caractérisé en ce que** l'agent de réduction est mélangé avec un agent complexant des sels métalliques.

9. Procédé selon l'une des revendications 1 à 8, **caractérisé en ce que** le substrat est entouré de milieu alcalin avant ou en même temps que l'addition de l'agent d'oxydation.

10. Procédé selon la revendication 9, **caractérisé en ce que** le milieu a un pH de 12 ou plus.

11. Procédé selon la revendication 9 ou 10, **caractérisé en ce que**, après l'addition de l'agent d'oxydation, le pH du milieu est amené à une gamme de 7 à 9 et l'on ajoute ensuite l'agent de réduction.

12. Procédé selon l'une des revendications 9 à 11, **caractérisé en ce qu'**un ou plusieurs lavages sont effectués entre l'addition de l'agent d'oxydation et l'addition de l'agent de réduction et/ou qu'un ou plusieurs lavages sont effectués après l'addition de l'agent de réduction.

13. Procédé selon l'une des revendications 9 à 12, **caractérisé en ce que** la purification peut s'effectuer une ou plusieurs fois par les mêmes agents d'oxydation ou des agents d'oxydations différents et/ou que la purification peut s'effectuer une ou plusieurs fois par les mêmes agents de réduction ou des agents de réduction différents.

14. Procédé selon la revendication 13, **caractérisé en ce qu'**une ou plusieurs étapes de lavage interviennent en cas de purification multiple entre chaque addition de l'agent d'oxydation, et/ou qu'une ou plusieurs étapes de lavage interviennent en cas de purification multiple entre chaque addition de l'agent de réduction.
